# EUROPÄISCHE PATENTSCHRIFT

(11) **EP 1 132 730 B1**
(45) Veröffentlichungstag und Bekanntmachung des Hinweises auf die Patenterteilung: **09.04.2003**
(21) Anmeldenummer: 01810126.1
(22) Anmeldetag: 07.02.2001
(51) Int. Cl.: G01N 19/02, G01B 17/00, G01M 13/02, G01N 29/10

(54) **Verfahren und Anordnung zur Beurteilung des Reibverhaltens zwischen zwei Gegenlaufpartnern**
Method and device for determining the friction between two moving parts
Méthode et dispositif pour déterminer le frottement entre deux pièces mobiles

(30) Priorität: 07.03.2000 EP 00810191
(43) Veröffentlichungstag der Anmeldung: 12.09.2001
(73) Patentinhaber: Sulzer Markets and Technology AG, 8401 Winterthur (CH)
(72) Erfinder: Moser, Urs, Dr., 8006 Zürich (CH)
(74) Vertreter: Sulzer Management AG

(56) Entgegenhaltungen:
- EP-A- 0 706 039
- EP-A- 0 738 901
- EP-A- 1 006 271
- DE-A- 3 231 587
- DE-C- 19 626 669
- GB-A- 2 154 277
- US-A- 4 711 120
- US-A- 4 887 087
- PATENT ABSTRACTS OF JAPAN vol. 010, no. 282 (P-500), 25. September 1986 (1986-09-25) & JP 61 102508 A (TOYOTA MOTOR CORP;OTHERS: 01), 21. Mai 1986 (1986-05-21)
- PATENT ABSTRACTS OF JAPAN vol. 013, no. 422 (P-933), 20. September 1989 (1989-09-20) & JP 01 153934 A (MITSUBISHI HEAVY IND LTD), 16. Juni 1989 (1989-06-16)
- PATENT ABSTRACTS OF JAPAN vol. 1999, no. 08, 30. Juni 1999 (1999-06-30) & JP 11 072132 A (JAPAN RADIO CO LTD), 16. März 1999 (1999-03-16)

## Beschreibung

Die Erfindung betrifft ein Verfahren und eine Anordnung zur Beurteilung des Reibverhaltens zwischen zwei Gegenlaufpartnern, von denen jeder eine Lauffläche aufweist, wobei sich die eine Lauffläche im Betriebszustand entlang der anderen Lauffläche bewegt.

Es gibt zahlreiche Maschinen und Systeme, bei denen zum Lagern, Führen oder Abdichten von relativ zueinander bewegten Teilen zwei Gegenlaufpartner vorgesehen sind, die während des Betriebs aneinander gleiten, um die Lager-, Führ- oder Dichtfunktion auszuüben:

In Brennkraftmaschinen mit Hubkolben bewegen sich beispielsweise die an dem Kolben vorgesehenen Kolbenringe entlang der Zylinderlaufbahn, die ihren Gegenlaufpartner darstellt. Ferner werden zur Abdichtung, Lagerung und Führung der Kolbenstange in Hubkolbenmaschinen, z. B. Kompressoren, üblicherweise bezüglich des Gehäuses fixierte Packungen mit mehreren Ringen verwendet, die auf der Kolbenstange als Gegenlaufpartner gleiten. Auch in Lagern oder Gleitringdichtungen zum Lagern und Abdichten von rotierenden Wellen, z. B. in Pumpen, bewegen sich zwei Gegenlaufpartner reibend aneinander. Dabei ist einer der Gegenlaufpartner drehfest mit der rotierenden Welle verbunden und der andere drehfest bezüglich des stationären Teils der Maschine.

Allen diesen Beispielen ist gemeinsam, dass das Zusammenwirken der relativ zueinander bewegten Gegenlaufpartner auf der Reibung zwischen den Gegenlaufpartnern basiert. Die Gegenlaufpartner können entweder ein trockenlaufendes oder ein geschmiertes Reibsystem bilden. In Trockenlaufsystemen, beispielsweise trockenlaufende Kolbenkompressoren, ist keine Fremdschmierung vorgesehen und üblicherweise ist in mindestens einem der Gegenlaufpartner ein Festschmierstoff eingelagert. In geschmierten Reibsystemen, beispielsweise Brennkraftmaschinen, ist typischerweise ein fluider Fremdschmierstoff, z. B. ein Öl oder eine andere Flüssigkeit vorgesehen, der einen Schmierfilm zwischen den Gegenlaufpartnern ausbildet.

Die messtechnische Erfassung und Überwachung der Reibung zwischen zwei Gegenlaufpartnern ist während des Betriebs in der Regel nur indirekt, beispielsweise über den auftretenden Verschleiss, möglich. Für Grossdieselmotoren, wie sie beispielsweise als Antriebsaggregate für Schiffe oder in stationären Anlagen zur Stromerzeugung eingesetzt werden, wird beispielsweise in der EP-A-706 039 ein induktives Messprinzip vorgeschlagen, mit welchem der Verschleisszustand eines speziell gefertigten Kolbenrings messtechnisch erfassbar ist. Mit solchen Messungen lässt sich jedoch nur der bereits aufgetretene Verschleiss ermitteln. Es ist aber wünschenswert, das Reibverhalten zwischen den Gegenlaufpartnern während des Betriebs beurteilen zu können, denn anhand von Änderungen des Reibverhaltens liessen sich Anormalitäten oder Änderungen im Laufverhalten der Gegenlaufpartner deutlich früher erkennen als anhand des bereits aufgetretenen Verschleisses. Dadurch lassen sich schwere und kostspielige Schäden, beispielsweise Kolbenfresser oder anormal hohe Verschleisswerte, wesentlich wirkungsvoller vermeiden.

DE 3231587 (HITACHI LTD) beschreibt einen Verfahren und eine Anordnung zur Bestimmung der Reibung zwischen Rotor- und Statorteilen einer Rotationsmaschine. Ein akustischer Fühler ist auf einem Lager montiert. Die Reibung wird von einer Frequenzanalyse des akustischen Signals bestimmt.

US471120 (KWUN HEGEON ET AL) beschreibt einen Verfahren und eine Anordnung zur Bestimmung des Zustands von einem Zylinder und einem Kolbenring. Ein Ultraschallwandler ist im Zylinder angeordnet. Er kann den Zylinder mit Ultraschallsignalen beaufschlagen und die von dem Wand des Zylinders reflektierten Echosignale empfangen. Aus der Laufzeit des Schalls lassen sich dann die aktuelle Dicke des Zylinders und der Verschleiss der Lauffläche ermitteln.

JP61102508 (Fujitsu ten Itd) beurteilt die Rauhigkeit einer Strassenoberfläche mittels der Dopplerveschiebung von elektrischen Wellen.

Daher ist es eine Aufgabe der Erfindung, ein Verfahren und eine Anordnung vorzuschlagen, mit welchen das Reibverhalten zwischen zwei Gegenlaufpartnern während des Betriebs und möglichst schnell beurteilt werden kann. Das Verfahren und die Anordnung sollen insbesondere geeignet sein, um das Reibverhalten zwischen den Kolbenringen und der Zylinderlaufbahn in einer Brennkraftmaschine, speziell in einem Grossdieselmotor, zu beurteilen. Ferner sollen das Verfahren und die Anordnung auch für solche Gegenlaufpartner geeignet sein, die während des Betriebs relativ zueinander rotieren, beispielsweise Gleitringdichtungen.

Die diese Aufgaben in verfahrenstechnischer und apparativer Hinsicht lösenden Gegenstände der Erfindung sind durch die Merkmale des unabhängigen Anspruchs der jeweiligen Kategorie gekennzeichnet.

Erfindungsgemäss wird also ein Verfahren und eine Anordnung vorgeschlagen zur Beurteilung des Reibverhaltens zwischen zwei Gegenlaufpartnern, von denen jeder eine Lauffläche aufweist, wobei sich die eine Lauffläche im Betriebszustand entlang der anderen Lauffläche bewegt. Das erfindungsgemässe Verfahren umfasst die folgenden Schritte: eine der Laufflächen wird mit Ultraschallsignalen beaufschlagt, von der Lauffläche reflektierte Ultraschallsignale werden als Echosignale empfangen, die Echosignale werden als Empfangssignale einer Auswerteeinheit zugeführt, mittels der Auswerteeinheit wird die Dopplerverschiebung der Empfangssignale ermittelt, und mittels der Dopplerverschiebung wird das Reibverhalten zwischen den Gegenlaufpartnern beurteilt.

Die erfindungsgemässe Anordnung umfasst einen Ultraschallwandler und eine Auswerteeinheit, wobei der Ultraschallwandler eine der Laufflächen mit Ultraschallsignalen beaufschlagt, von der Lauffläche reflektierte Ultraschallsignale als Echosignale empfängt und diese als Empfangssignale der Auswerteeinheit zuführt, und wobei die Auswerteeinheit Auswertemittel umfasst, welche die Dopplerverschiebung der Empfangssignale ermittelt, und mittels der Dopplerverschiebung einen Kennwert zur Beurteilung des Reibverhaltens zwischen den Gegenlaufpartnern bestimmt.

Die Erfindung beruht auf der Feststellung, dass die Reibung zwischen zwei Gegenlaufpartnern in Ultraschallsignalen, mit denen die Lauffläche eines Gegenlaufpartners beaufschlagt wird, eine Dopplerverschiebung verursacht, die stark genug ausgeprägt ist, um eine Beurteilung des Reibverhaltens zu ermöglichen. Insbesondere führen Änderungen der Reibung zu signifikanten Änderungen im Spektrum der Dopplerverschiebung. Falls also während des Betriebs eine Zunahme der Reibung zwischen den Gegenlaufpartnern auftritt, beispielsweise aufgrund einer mangelnden Schmierung, oder eine Abnahme der Reibung, beispielsweise durch einen schadhaften oder verschlissenen Kolbenring, so ist dies anhand der Dopplerverschiebung detektierbar und es können rechtzeitig entsprechende Gegenmassnahmen getroffen werden, um schwerwiegende Folgeschäden zu vermeiden.

Da der Ultraschallwandler keinen direkten körperlichen Kontakt mit der Lauffläche haben muss, eignen sich das erfindungsgemässe Verfahren und die erfindungsgemässe Anordnung auch zur Beurteilung des Reibverhaltens an unzugänglichen oder nur schwer zugänglichen Stellen, z.B. zur Beurteilung des Reibverhaltens zwischen einem Kolbenring und der Zylinderlauffläche in einer Brennkraftmaschine. Zudem kann das Verfahren bzw. die Anordnung problemlos während des normalen Betriebszustandes einer Maschine eingesetzt werden, sodass eine Beurteilung und damit eine Überwachung des momentanen Reibverhaltens zwischen den Gegenlaufpartnern quasi online möglich ist.

Es hat sich gezeigt, dass eine Erhöhung der Reibung zwischen den Gegenlaufpartnern insbesondere zu einer Verstärkung bzw. zu einer Zunahme derjenigen Komponenten der Dopplerverschiebung führt, die bei hohen Frequenzen liegen. Daher werden vorzugsweise zur Beurteilung des Reibverhaltens aus dem Frequenzspektrum für die Dopplerverschiebung nur diejenigen Frequenzen berücksichtigt, die grösser sind als ein vorgegebener Grenzwert.

Aus Gründen einer möglichst einfachen Auswertung ist es bevorzugt, wenn die Lauffläche im wesentlichen senkrecht zur Richtung der Relativbewegung der beiden Gegenlaufpartner mit den Ultraschallsignalen beaufschlagt wird.

Gemäss einem ersten Ausführungsbeispiel der Erfindung wird die Lauffläche mit Ultraschallimpulsen beaufschlagt, das heisst der Ultraschallwandler sendet in regelmässigen Abständen Wellenpakete als Ultraschallimpulse aus.

Gemäss einem zweiten Ausführungsbeispiel wird die Lauffläche mit einer kontinuierlichen Ultraschallwelle beaufschlagt, das heisst bei diesem, üblicherweise "continous wave" (CW) genannten Verfahren sendet der Ultraschallwandler die Ultraschallsignale nicht in Form einzelner diskreter Impulse sondern permanent als kontinuierliche Welle aus. Beim CW-Verfahren umfasst der Ultraschallwandler vorzugsweise zwei Wandlerelemente, von denen eins zum Aussenden des Ultraschallsignals dient und das andere zum Empfangen der Echosignale. Die beiden Wandlerelemente sind so angeordnet, dass sich das Sendefeld des ersten Wandlerelements und das Empfangsfeld des zweiten Wandlerelements zumindest teilweise überschneiden. Dies ist beispielsweise realisierbar, indem die beiden Wandlerelemente nebeneinander und gegebenenfalls leicht geneigt zueinander angeordnet sind, sodass sich ihre Achsen bei der Lauffläche schneiden. Die beiden Wandlerelemente können aber auch konzentrisch angeordnet sein.

Eine bevorzugte Verwendung des erfindungsgemässen Verfahrens oder der erfindungsgemässen Anordnung ist die Verwendung zur Beurteilung des Reibverhaltens zwischen einem Kolbenring und seinem Gegenlaufpartner in einer Brennkraftmaschine, insbesondere in einem Grossdieselmotor, z. B dem Hauptmotor eines Schiffs.

Weitere vorteilhafte Massnahmen und bevorzugte Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der schematischen Zeichnung zeigen:
- Fig. 1:: ein Blockdiagramm zur Veranschaulichung eines ersten Ausführungsbeispiels der Erfindung,
- Fig. 2:: verschiedene Signale als Funktion der Zeit,
- Fig. 3:: einige Signale aus Fig. 2 im Frequenzraum,
- Fig. 4:: ein Blockdiagramm zur Veranschaulichung eines zweiten Ausführungsbeispiels der Erfindung,
- Fig. 5,6:: zwei Frequenzspektren der Dopplerverschiebung für verschieden starke Reibung,
- Fig. 7:: ein Blockdiagramm einer Ausgestalltung des Signalanalysators, und
- Fig. 8:: eine Aufsicht auf eine Ausgestaltung des Ultraschallwandlers mit zwei Wandlerelementen.

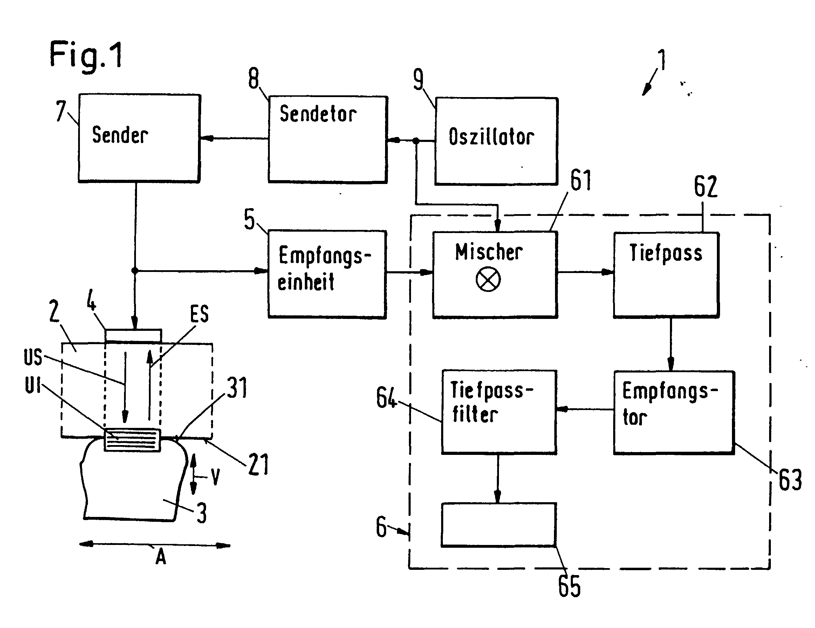

Das Blockdiagramm in Fig. 1 veranschaulicht ein erstes Ausführungsbeispiel des erfindungsgemässen Verfahrens bzw. der erfindungsgemässen Anordnung zur Beurteilung des Reibverhaltens zwischen zwei Gegenlaufpartnem 2,3, von denen jeder eine Lauffläche 21 bzw. 31 aufweist, wobei sich die eine Lauffläche 31 im Betriebszustand entlang der anderen Lauffläche 21 bewegt, wie dies der Doppelpfeil A in Fig. 1 andeutet. Die Anordnung ist gesamthaft mit dem Bezugszeichen 1 bezeichnet.

Mit dem Begriff "Gegenlaufpartner" sind dabei Komponenten einer Maschine gemeint, die im Betriebszustand der Maschine reibend aneinander gleiten und somit ein Reibsystem bilden. Die Gegenlaufpartner 2,3 können ein Trockenlaufsystem bilden, das heisst es ist kein Fremdschmiermittel zwischen den Gegenlaufpartnern 2,3 vorgesehen, oder die Gegenlaufpartner 2,3 bilden ein geschmiertes Reibsystem, das heisst zwischen den Laufflächen 21,31 der Gegenlaufpartner 2,3 befindet sich im normalen Betriebszustand ein Fremdschmiermittel, beispielsweise ein Schmierölfilm oder ein sonstiges Schmier- bzw. Gleitmittel.

Die durch den Pfeil A angedeutete Bewegung der Gegenlaufpartner 2,3 relativ zueinander kann eine lineare Bewegung sein, wie sie zum Beispiel als oszillatorische Hubbewegung in einer Hubkolbenmaschine auftritt, oder auch eine Rotationsbewegung, wie sie zum Beispiel in einer Dichtung einer rotierenden Welle auftritt.

Im Folgenden werden in nicht abschliessender Aufzählung einige Beispiel für Gegenlaufpartner genannt: ein Kolbenring und die Zylinderwand bzw. der Zylindereinsatz (Liner) in einer Brennkraftmaschine, ein Kolbenring und die Zylinderwand in einem geschmierten oder trockenlaufenden Kolbenkompressor, die Ringe einer Packung und die Kolbenstange in einer Hubkolbenmaschine, eine rotierende Welle und eine Lagerbuchse für diese Welle, der Gleitring und der Stator in einer Gleitringdichtung zum Abdichten einer rotierenden Welle.

Bei der folgenden Beschreibung wird mit beispielhaftem Charakter auf den Anwendungsfall einer Brennkraftmaschine, speziell eines Grossdieselmotors, Bezug genommen. Die Ausführungen gelten jedoch in sinngemäss gleicher Weise auch für alle anderen Gegenlaufpartner 2,3.

In einem Grossdieselmotor bewegt sich ein Kolben oszillatorisch in einem im Zylinder angeordneten Zylindereinsatz, der auch als Liner bezeichnet wird. An dem Kolben sind in der Regel mehrere Kolbenringe vorgesehen, die sich bei der Hubbewegung des Kolbens entlang der inneren Wandung des Liners bewegen, wobei zwischen dem Liner und den Kolbenringen ein Schmierfilm vorgesehen ist.

Bezugnehmend auf Fig. 1 ist der Zylinderliner der eine Gegenlaufpartner 2, der in diesem Falle stationär ist, und die innere Wandung des Liners bildet die eine Lauffläche 21. Der andere Gegenlaufpartner 3 ist ein Kolbenring, dessen radial äussere Begrenzungsfläche die andere Lauffläche 31 bildet, welche sich während des Betriebs entlang der Lauffläche 21 bewegt.

Die Anordnung 1 umfasst einen Ultraschallwandler 4, welcher so angeordnet ist, dass er die Lauffläche 31 mit Ultraschallsignalen UI beaufschlagen kann, eine Empfangseinheit 5 und eine Auswerteeinheit 6. Zur Ansteuerung des Ultraschallwandlers 4 ist ein Oszillator 9, ein Sendetor 8 und ein Sender 7 vorgesehen. Die Auswerteeinheit 6 umfasst einen Mischer 61, einen Tiefpass 62, ein Empfangstor 63 ein weiteres Tiefpassfilter 64 sowie einen Signalanalysator 65.

Im Falle einer Brennkraftmaschine ist der Ultraschallwandler 4 beispielsweise am Zylinder bzw. am Zylinderliner angeordnet oder in einer im Zylinder bzw. im Liner vorgesehenen Ausnehmung, die sich vorzugsweise in radialer Richtung, das heisst senkrecht zur Längsachse des Zylinders erstreckt. Der Ultraschallwandler 4 ist so angeordnet, dass die von ihm generierten Ultraschallsignale im wesentlichen in radialer Richtung ausgesendet werden und somit senkrecht zur Richtung A der Relativbewegung der beiden Gegenlaufpartner 2,3 auf die Laufflächen 21,31 auftreffen.

Bei dem Ausführungsbeispiel gemäss Fig. 1 wird der Ultraschallwandler 4 gepulst betrieben, das heisst er sendet in regelmässigen Abständen ein Ultraschall-Wellenpaket aus. In Fig. 1 ist ein solcher Ultraschallimpuls UI symbolisch dargestellt; seine Fortpflanzungsrichtung wird durch den Pfeil US angezeigt. Der Ultraschallimpuls UI propagiert durch den Gegenlaufpartner 2 und trifft auf die Lauffläche 31 des Gegenlaufpartners 3. Die Lauffläche 31 reflektiert einen Teil des Ultraschallsignals UI und generiert somit ein Echosignal ES, welches empfangen und in der Auswerteeinheit 6 ausgewertet wird.

Die Reibung zwischen den relativ zueinander bewegten Gegenlaufpartnern 2,3 verursacht Vibrationen der Gegenlaufpartner 2,3. Diese Vibrationen haben eine zum Ultraschallwandler 4 gerichtete Geschwindigkeitskomponente, die in Fig. 1 durch den Doppelpfeil V angedeutet ist. Aufgrund dieser Geschwindigkeitskomponente V der Vibrationen weist das von der Lauffläche 31 durch Reflexion generierte Echosignal ES eine Frequenzverschiebung auf, die auf dem Dopplereffekt beruht und als Dopplerverschiebung bezeichnet wird. In der Auswerteeinheit 6 wird die Dopplerverschiebung ermittelt und anhand dieser die Reibung beurteilt.

Es hat sich gezeigt, dass dieses Verfahren sehr sensitiv ist. Sogar wenn die von der Reibung verursachten Vibrationen typischerweise nur Amplituden im Mikrometerbereich aufweisen, also grössenordnungsmässig etwa um einen Faktor 10³ kleiner sind als die Wellenlänge der typischerweise hier verwendeten Ultraschallsignale, kann die Dopplerverschiebung aus dem Echosignal separiert werden.

Falls sich nun die Reibung zwischen den Gegenlaufpartnern 2,3 ändert, so führt dies zu Änderungen in der Frequenz und/oder der Amplitude der Vibrationen. Daraus resultiert eine Änderung der Dopplerverschiebung, die sich als stark genug erwiesen hat, um detektiert werden zu können. Auf diese Weise ist eine Beurteilung des Reibverhaltens zwischen den Gegenlaufpartnern 2,3 anhand der Dopplerverschiebung möglich.

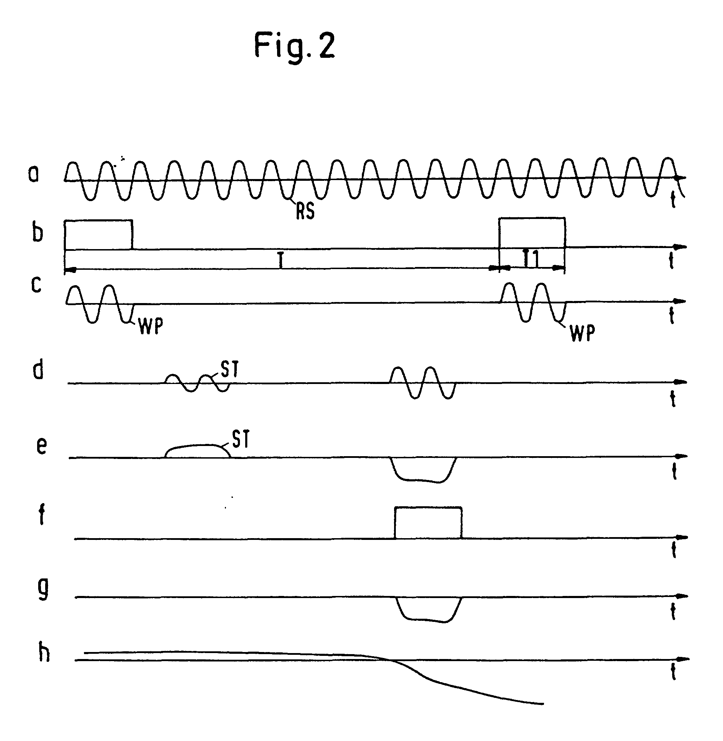

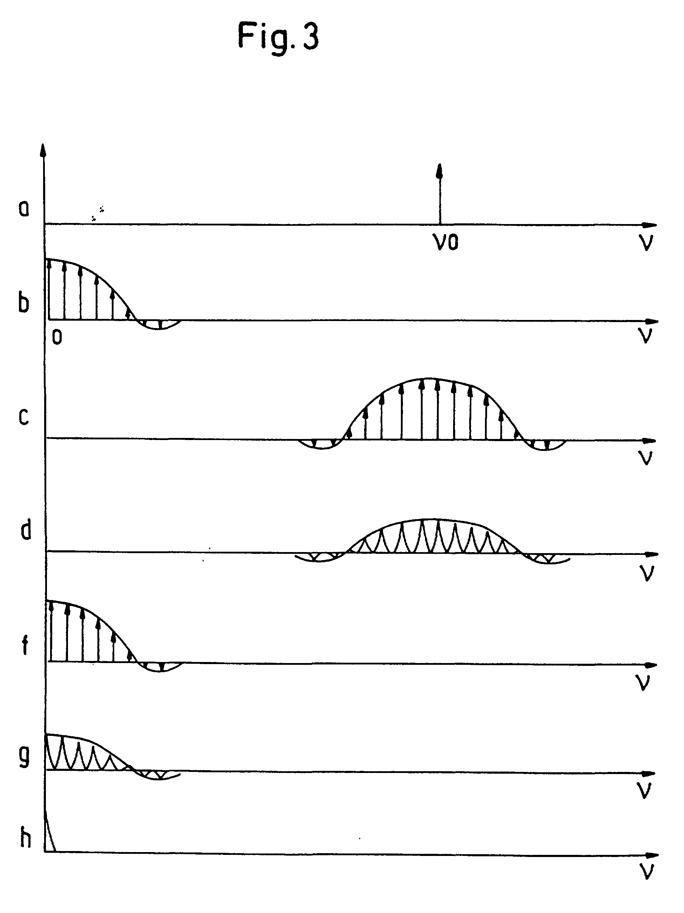

Im Folgenden werden nun die wesentlichen Schritte für das in Fig. 1 veranschaulichte Ausführungsbeispiel, welches mit gepulsten Ultraschallsignalen arbeitet, näher erläutert. Dabei wird auch auf die Fig. 2 und 3 Bezug genommen. Fig. 2 zeigt verschiedene noch zu erläuternde Signale im Zeitraum, das heisst als Funktion der Zeit t und Fig. 3 zeigt entsprechende Signale im Frequenzraum, das heisst als Funktion der Frequenz ν.

Der Oszillator 9, der vorzugsweise ein quarzstabiler Oszillator ist, generiert ein Referenzsignal RS mit einer konstanten Frequenz ν₀ von beispielsweise 2 MHz. Dieses Referenzsignal RS ist im Diagramm a der Fig. 2 bzw. 3 dargestellt. Das Referenzsignal RS wird an das Sendetor 8 übermittelt, welches einen elektronischen Schalter darstellt, der einige Schwingungen, beispielsweise vier, aus dem Referenzsignal "ausschneidet" und auf diese Art ein Wellenpaket WP erzeugt. Das Sendetor 8 wird periodisch in gleichen Zeitabständen T (z. B. alle 100 Mikrosekunden) für eine vorgegebene Zeitspanne T1 aktiviert, das heisst geöffnet. Dies ist in den Diagrammen b in Fig. 2 und 3 dargestellt. Am Ausgang des Sendetors 8 entstehen dann in periodischen, stets gleichen Zeitabständen T Wellenpakete, die in den Diagrammen c in Fig. 2 und 3 dargestellt sind. Im Zeitraum (Fig. 2) ergibt sich das Diagramm c durch Multiplikation der Diagramme a und b.

Die Wellenpakete WP werden dem Sender 7 übermittelt, der diese verstärkt und dem Ultraschallwandler 4 zuführt, der üblicherweise mindestens einen piezzoelektrischer Schallwandler aufweist. Der Ultraschallwandler 4 transformiert die Wellenpakete WP in Ultraschallimpulse UI, die wie vorne beschrieben an der Lauffläche 31 des Gegenlaufpartners 3 reflektiert werden. Dabei wird das Spektrum des gesendeten Wellenpakets, das in Fig. 3, Diagramm c veranschaulicht ist, an der vibrierenden Lauffläche 31 des Gegenlaufpartners 3 frequenzmoduliert. Jede Spektralkomponente wird daher verbreitert (Fig. 3, Diagramm d). Das resultierende Echosignal erreicht den Ultraschallwandler 4, welcher das Echosignal in ein elektrisches Empfangssignal umwandelt. Die Empfangssignale sind in den Diagrammen d der Fig. 2 und 3 dargestellt. In Fig.3, Diagramm d ist zu erkennen, dass das Spektrum des Empfangssignals durch den Dopplereffekt moduliert ist. Das Stationärecho, welches durch Reflexion an der Lauffläche 21 entsteht, ist nicht oder nur sehr wenig frequenzmoduliert und im Diagramm d der Fig. 3 nicht dargestellt. In Fig. 2, Diagramm d ist zusätzlich ein unerwünschtes Störsignal ST dargestellt, welches beispielsweise durch Reflexionen aus anderen Gebieten als der Grenzschicht zwischen den beiden Gegenlaufpartnern 2,3 entsteht.

Die Empfangssignale werden der Empfangseinheit 5 zugeführt, dort verstärkt und dann an die Auswerteeinheit 6 übermittelt. Da die Frequenzverschiebung aufgrund des Dopplereffekts, die typischerweise nur bis zu einigen hundert Hertz beträgt, im Vergleich zur Frequenz des Referenzsignals RS relativ gering ist, wird das Empfangssignal im Mischer 61 der Auswerteeinheit 6 zur Demodulation mit dem Referenzsignal RS gemischt. Dies entspricht im Zeitraum einer Multiplikation des Referenzsignals RS mit dem Empfangssignal. Dadurch stehen am Ausgang des Mischers 61 die Summenund die Differenzfrequenzen aus dem Referenzsignal RS und dem Empfangssignal zur Verfügung. Die höher frequenten Summenfrequenzen werden von dem nachfolgenden Tiefpass 62 unterdrückt. Die verbleibenden Differenzfrequenzen stellen die Dopplerverschiebung dar. Auf diese Weise können die Dopplerverschiebungen aus dem Empfangssignal separiert und somit bestimmt werden. Das resultierende Signal nach Durchlaufen des Mischers 61 und des Tiefpassfilters 62 ist im Diagramm e der Fig. 2 dargestellt. Es ist zu erkennen, dass das Störsignal ST immer noch im Signal vorhanden ist. Die Eliminierung des Störsignals ST kann wie folgt durchgeführt werden.

Bei dem Ausführungsbeispiels gemäss Fig. 1 werden Ultraschallimpulse UI verwendet, das heisst es handelt sich um eine gepulstes System. Da der Abstand zwischen dem Ultraschallwandler 4 und der Grenzschicht zwischen den Gegenlaufpartnern 2,3 sowie die Schallgeschwindigkeit in dem durchlaufenen Medium im wesentlichen konstante Grössen sind, die bekannt oder bestimmbar sind, lässt sich auch die Laufzeit der Schallimpulse vom Ultraschallwandler zur Grenzschicht und zurück ermitteln. Dies ermöglicht eine ortsaufgelöste Messung, indem für die Empfangssignale ein Zeitfenster festgelegt wird, dessen zeitlicher Abstand vom Zeitpunkt des Aussendens des Ultraschallimpulses Ul der benötigten Laufzeit zur Grenzschicht und zurück entspricht. Es werden dann nur solche Echo- bzw. Empfangssignale berücksichtigt, die innerhalb dieses Zeitfensters vom Ultraschallwandler 4 erfasst werden. Dieses Zeitfenster wird durch das Empfangstor 63 realisiert und ist in den Diagrammen f der Fig. 2 und 3 dargestellt. Im Frequenzraum (Fig. 3, Diagramm f) entspricht das Spektrum des Empfangstors 63 dem Spektrum des Sendetors 8. Durch das Empfangstor 63 wird das Spektrum, welches im Diagramm d der Fig. 3 dargestellt ist, im Frequenzraum mit dem Spektrum des Empfangstors 63 (Fig.3, Diagramm f) gefaltet, wodurch die Repetitionen der durch die Frequenzmodulation (Dopplerverschiebung) entstandenen Anteile übereinandergelegt werden. Das Empfangstor 63 trägt wesentlich dazu bei, dass unerwünschte Störsignale ST eliminiert werden. In den Diagrammen g der Fig.2 und der Fig. 3 ist das Signal nach Durchlaufen des Empfangstors 63 dargestellt. Insbesondere in Fig. 2, Diagramm g ist deutlich zu erkennen, dass das Störsignal ST eliminiert wurde.

Bei dem hier beschriebenen Ultraschallsystem handelt es sich aufgrund des gepulsten Betriebs um ein abtastendes System, wobei die Abtastfrequenz gleich der Repetitionsfrequenz der Ultraschallimpulse ist. Letztere ist der Kehrwert des Zeitabstands T zwischen zwei aufeinanderfolgenden Ultraschallimpulsen UI. Um das Frequenzspektrum für die Dopplerverschiebung zu rekonstruieren, muss deshalb das Signal, welches im Diagramm g der Fig. 3 dargestellt ist, mit dem Tiefpassfilter 64 gefiltert werden, welches als Nyquistfilter dient, das heisst die Grenzfrequenz des Tiefpassfilters 64 ist maxiamal so gross wie die halbe Repetitionsfrequenz der Ultraschallimpulse, sodass alle höheren Frequenzen im wesentlichen eliminiert werden. Das derart rekonstruierte Frequenzspektrum für die Dopplerverschiebung relativ zur Frequenz der Ultraschallimpulse (Referenzfrequenz RS) ist im Diagramm h der Fig. 3 dargestellt und wird als Dopplerspektrum bezeichnet. Es enthält noch sämtliche Frequenzanteile der Dopplerverschiebung. Das Diagramm h in Fig. 2 zeigt einen Ausschnitt aus dem entsprechenden Signal im Zeitraum.

Da die Frequenzen der Vibrationen des Gegenlaufpartners 3 typischerweise im Bereich von einigen Kilohertz liegen, also sehr viel kleiner sind als die Frequenz des gesendeten Ultraschallsignals (beispielsweise 2 MHz), und zudem die Amplituden der Vibrationen, die üblicherweise weniger als 100 Mikrometer betragen, kann die Form des Dopplerspektrums in einfacher Weise abgeschätzt werden.

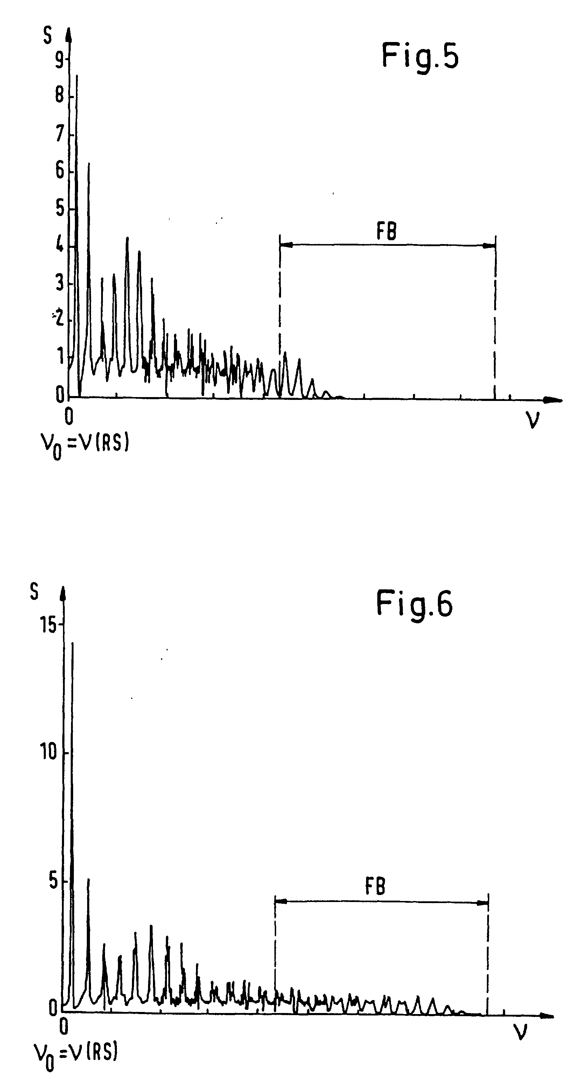

Nachdem das Dopplerspektrum ermittelt wurde, wird es zur weiteren Auswertung an den Signalanalysator 65 übermittelt. Diese Auswertung wird weiter hinten im Zusammenhang mit den Fig. 5 und 6 erläutert.

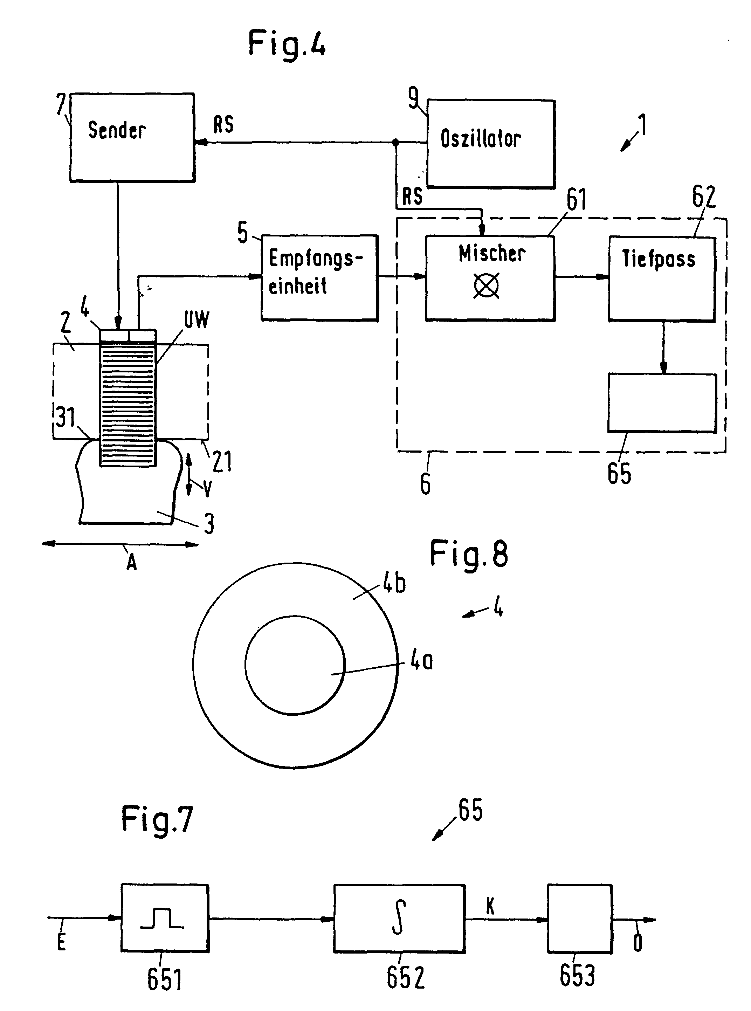

Fig. 4 zeigt in einer zu Fig. 1 analogen Darstellung ein Blockdiagramm eines zweiten Ausführungsbeispiels der Erfindung. Dabei sind identische oder von der Funktion her gleichwertige Teile mit den gleichen Bezugszeichen versehen, die bereits erläutert wurden.

Der wesentliche Unterschied zwischen dem ersten und dem zweiten Ausführungsbeispiel liegt darin, dass bei dem zweiten Ausführungsbeispiel die Lauffläche 31 mit einer kontinuierlichen Ultraschallwelle UW beaufschlagt wird. Es handelt sich hier also nicht um ein gepulstes, sondern um ein kontinuierliches Verfahren, das als continous-wave-Verfahren (CW-Verfahren) bezeichnet wird. Ansonsten gelten die Erläuterungen bezüglich des ersten Ausführungsbeispiels in sinngemäss gleicher Weise auch für das zweite Ausführungsbeispiel. Das CW-Verfahren, das technisch einfacher ist als das gepulste Verfahren eignet sich für solche Anwendungen, bei denen keine Orts- oder Distanzauflösung der Ultraschallsignale bzw. der Echosignale notwendig ist, beispielsweise wenn den Echosignalen keine oder nur geringe Störsignale überlagert sind.

Beim CW-Verfahren umfasst der Ultraschallwandler 4 vorzugsweise zwei Wandlerelemente 4a,4b (siehe Fig. 8), von denen eins zum Aussenden des Ultraschallsignals dient und das andere zum Empfangen der Echosignale. Die beiden Wandlerelemente 4a, 4b sind so angeordnet, dass sich das Sendefeld des ersten Wandlerelements 4a und das Empfangsfeld 4b des zweiten Wandlerelements zumindest teilweise überschneiden. Dies ist beispielsweise realisierbar, indem die beiden Wandlerelemente 4a, 4b nebeneinander und gegebenenfalls leicht geneigt zueinander angeordnet sind, sodass sich ihre Achsen bei der Lauffläche schneiden. Mit den Achsen sind die Hauptrichtungen der Schallfortpflanzung gemeint, also die Richtung in welche ein Ultraschallsignal von dem Wandlerelement ausgesendet wird. Die beiden Wandlerelemente 4a,4b können aber auch konzentrisch angeordnet sein. Eine derartige Ausgestaltung des Ultraschallwandlers 4 ist in Fig. 8 in einer Aufsicht dargestellt. Das erste Wandlerelement 4a ist kreisförmig ausgestaltet und das zweite Wandlerelement 4b ringförmig, wobei das zweite Wandlerelement 4b das erste Wandlerelement 4a umgibt. Prinzipiell ist es dabei egal, welches der beiden Wandlerelemente 4a, 4b zum Aussenden des Ultraschallsignals verwendet wird, und welches zum Empfangen der Echosignale.

Durch die Massnahme, zwei Wandlerelemente 4a,4b an dem Ultraschallwandler 4 vorzusehen, wird der Sender vom Empfänger entkoppelt, damit die stärkeren Sendesignale nicht den Empfänger "verstopfen".

Der Oszillator 9 (Fig. 4) generiert das kontinuierliche Referenzsignal RS mit konstanter Frequenz. Das Referenzsignal RS wird im Sender 7 verstärkt und dann dem Ultraschallwandler 4 zugeführt. Das Wandlerelement 4a des Ultraschallwandlers 4 transformiert das Signal und sendet es als kontinuierliche monofrequente Ultraschallwelle UW aus. Die Ultraschallwelle durchläuft den Gegenlaufpartner 2 und wird an der Lauffläche 31 des Gegenlaufpartners 3 reflektiert, wodurch das Echosignal generiert wird. Bei dieser Reflexion wird die Ultraschallwelle durch die Vibrationen (angedeutet durch den Pfeil A) frequenzmoduliert. Das frequenzmodulierte Echosignal wird von dem Wandlerelement 4b des Ultraschallwandlers 4 empfangen, in ein elektrisches Empfangssignal transformiert und dann an die Empfangseinheit 5 weitergeleitet. Diese verstärkt das Empfangssignal und übermittelt es an die Auswerteeinheit 6. In der Auswerteeinheit 6 wird das Empfangssignal in sinngemäss gleicher Weise wie vorne erläutert zunächst durch den Mischer 61 demoduliert, indem es mit dem Referenzsignal RS multipliziert wird. Dannach eliminiert das Tiefpassfilter 62 die aus der Mischung resultierenden Summenfrequenzen. Die verbleibenden Differenzfrequenzen stellen das Dopplerspektrum dar, welches zur weiteren Auswertung an den Signalanalysator 65 weitergeleitet wird.

In den Figuren 5 und 6 sind zwei typische Dopplerspektren dargestellt. Sie entsprechen jeweils einer vergrösserten Darstellung des in Fig. 3, Diagramm h vereinfacht dargestellten Dopplerspektrums. Nach rechts ist jeweils die Frequenz v relativ zur Frequenz ν₀ des Referenzsignal RS aufgetragen, das heisst der Nullpunkt der Frequenzachse ist die Frequenz ν₀=ν(RS) des Referenzsignals RS. Nach oben ist jeweils die Signalintensität S in zufälligen Einheiten aufgetragen.

Da es rein qualitativ keinen Unterschied macht, ob die Dopplerspektren mittels des gepulsten Verfahrens (erstes Ausführungsbeispiel) oder mittels des CW-Verfahrens bestimmt wurden, solange die Dopplerverschiebungen kleiner sind als die Nyquistfrequenz (was im allgemeinen der Fall ist), gelten die folgenden Erläuterung für beide Ausführungsbeispiele.

Das Dopplerspektrum in Fig. 6 entspricht einem Zustand, bei welchem die Reibung zwischen den beiden Gegenlaufpartnern 2,3 stärker ist als in dem Zustand, dem das Dopplerspektrum in Fig. 5 entspricht. Mit Erhöhung der Reibung nehmen die Vibrationsamplituden und/oder die Vibrationsfrequenzen rasch zu. Dies führt zu einer signifikanten Zunahme der Signalintensitäten der höheren Frequenzen im Dopplerspektrum, wie durch einen Vergleich der Fig. 5 und 6 deutlich zu erkennen ist. Das heisst, die Reibung zwischen den beiden Gegenlaufpartnern 2,3 hat einen direkten Einfluss auf das Dopplerspektrum, sodass anhand des Dopplerspektrums das Reibverhalten zwischen den beiden Gegenlaufpartnern beurteilt werden kann.

Beispielsweise können im normalen Betriebszustand, das heisst bei normalem Reibverhalten zwischen den Gegenlaufpartnern 2 und 3 Dopplerspektren aufgenommen werden, welche charakteristisch für diesen normalen Betriebszustand sind und als Referenzspektren dienen. Während des Betriebs werden dann ständig oder in vorgebbaren Intervallen Dopplerspektren ermittelt, welche repräsentativ für die momentan wirkende Reibung zwischen den Gegenlaufpartnern 2 und 3 sind. Diese Dopplerspektren werden dann jeweils mit den Referenzspektren verglichen, wodurch feststellbar ist, ob sich die Reibung signifikant gegenüber dem Normalwert geändert hat. Somit kann beispielsweise eine übermässig grosse Reibung quasi online während des Betriebs detektiert werden, und es können rechtzeitig Gegenmassnahmen getroffen werden, um Folgeschäden zu vermeiden.

Fig. 7 zeigt in einer Blockdarstellung eine mögliche Ausgestaltung des Signalanalysators 65. Er umfasst ein Bandpassfilter 651 eine Recheneinheit 652 und einen Schwellenwertdetektor 653. Das jeweils ermittelte Dopplerspektrum wird dem Signalanalysator 65 übergeben, wie dies der Pfeil E in Fig. 7 andeutet. Das Bandpassfilter 651 filtert aus dem Dopplerspektrum einen vorgebbaren Frequenzbereich FB (siehe Fig. 5 und6) heraus. Dieser Frequenzbereich FB wird so gewählt, dass er die Frequenzen des Dopplerspektrums enthält, bei denen signifikante Änderungen auftreten, wenn sich die Reibung zwischen den Gegenlaufpartnern 2,3 ändert. Im Falle der in Fig. 5 und 6 dargestellten Dopplerspektren ist beispielsweise der mittlere Frequenzbereich FB geeignet, welcher jeweils durch die beiden gestrichelten Linien begrenzt wird und Frequenzen von 2 kHz bis 4 kHz entspricht.

Nachdem der Frequenzbereich FB mittels des Bandpassfilters 651 herausgefiltert ist, ermittelt die Recheneinheit 652, beispielsweise durch eine Integration des Dopplerspektrums über diesen Frequenzbereich FB, eine Kenngrösse K zur Beurteilung des Reibverhaltens. Die Kenngrösse K ist repräsentativ für die Signalleistung in dem herausgefilterten Frequenzbereich. Die Recheneinheit 652 übermittelt die Kenngrösse K an den Schwellenwertdetektor 653. Wenn der Schwellenwertdetektor feststellt, dass die durch die Kenngrösse K repräsentierte Reibung einen Schwellenwert überschreitet oder ausserhalb eines zulässigen Bereichs liegt, löst er beispielsweise einen Alarm aus, wie dies der Pfeil O in Fig. 7 andeutet. Der oder die Schwellenwert(e) für die Kenngrösse K können z. B. experimentell ermittelt werden.

Grundsätzlich ist es egal, ob die Signalleistung aus der Dopplerverschiebung im Zeitraum bestimmt wird, beispielsweise über eine Autokorrelationsfunktion, oder im Frequenzraum, beispielsweise über ein Leistungsspektrum. Im Zeitraum kann die Kenngrösse K beispielsweise ermittelt werden, indem die Signalleistung des vom Bandpassfilter 651 durchgelassenen Signals, welche zum Beispiel durch Quadrieren des Signals bestimmbar ist, über eine vorgebbare Integrationszeit gemittelt wird. Eine solche Auswertung lässt sich auch mit analoger Schaltungstechnik einfach realisieren.

Natürlich sind auch differenziertere Auswertungen des Dopplerspektrums möglich, beispielsweise solche, die die Form des Dopplerspektrums berücksichtigen. Auch ist es möglich, das Dopplerspektrum zu digitalisieren, um eine differenziertere Auswertung durchzuführen.

Es sind natürlich auch für das gepulste Verfahren solche Ausgestaltungen möglich, bei denen der Ultraschallwandler 4 mehrere verschiedene Wandlerelemente umfasst, beispielsweise kann das Aussenden der Ultraschallsignale mit einem anderen Wandlerelement erfolgen als das Empfangen der Echosignale.

Wie bereits erwähnt ist die Erfindung auch für solche Gegenlaufpartner geeignet, die relativ zueinander eine Rotationsbewegung ausführen, wie dies beispielsweise in Gleitringdichtungen an rotierenden Wellen der Fall ist. Dann wird die rotierende Lauffläche, üblicherweise die Mantelfläche einer Kreisscheibe oder eines Zylinders, vorzugsweise aus der radialen Richtung mit den Ultraschallsignalen beaufschlagt, also senkrecht zur Richtung der Relativbewegung der beiden Gegenlaufpartner.

Natürlich ist es prinzipiell auch möglich, sowohl bei linearen, geradlinigen Bewegungen als auch bei Drehbewegungen der Gegenlaufpartner relativ zueinander, die entsprechende Lauffläche unter einem schiefen Winkel mit Ultaschallsignmalen zu beaufschlagen.

Durch die Erfindung wird also ein Verfahren und eine Vorrichtung vorgeschlagen, mit welchem die Reibung zwischen zwei Gegenlaufpartnem 2,3 während des Betriebs sehr schnell, quasi online, beurteilt und somit auch überwacht werden kann.

## Patentansprüche

1. Verfahren zur Beurteilung des Reibverhaltens zwischen zwei Gegenlaufpartnern (2,3), von denen jeder eine Lauffläche (21,31) aufweist, wobei sich die eine Lauffläche (31) im Betriebszustand entlang der anderen Lauffläche (21) bewegt, mit den folgenden Schritten:
a) eine der Laufflächen (31) wird mit Ultraschallsignalen (UI; UW) beaufschlagt,
b) von der Lauffläche (31) reflektierte Ultraschallsignale werden als Echosignale (ES) empfangen,
c) die Echosignale (ES) werden als Empfangssignale einer Auswerteeinheit (6) zugeführt,
d) mittels der Auswerteeinheit (6) wird die Dopplerverschiebung der Empfangssignale ermittelt, und
e) mittels der Dopplerverschiebung wird die Reibung zwischen den Gegenlaufpartnern (2,3) beurteilt.

2. Verfahren nach Anspruch 1, bei welchem die Empfangssignale zur Demodulation mit einem Referenzsignal (RS) gemischt werden, welches dieselbe Frequenz hat wie die Ultraschallsignale (UI;UW), mit denen die Lauffläche (31) beaufschlagt wird.

3. Verfahren nach einem der vorangehenden Ansprüche, bei welchem mittels der Auswerteeinheit (6) ein Frequenzspektrum für die Dopplerverschiebung relativ zur Frequenz der Ultraschallsignale (UI;UW) ermittelt wird.

4. Verfahren nach einem der vorangehenden Ansprüche, bei welchem zur Beurteilung des Reibverhaltens aus dem Frequenzspektrum nur diejenigen Frequenzen berücksichtigt werden, die grösser sind als ein vorgegebener Grenzwert.

5. Verfahren nach einem der vorangehenden Ansprüche, bei welchem eine Kenngrösse (K) zur Beurteilung des Reibverhaltens ermittelt wird, welche repräsentativ für die Signalleistung der Empfangssignale in einem vorgebbaren Frequenzbereich (FB) ist.

6. Verfahren nach einem der vorangehenden Ansprüche, bei welchem die Lauffläche (31) im wesentlichen senkrecht zur Richtung der Relativbewegung (A) der beiden Gegenlaufpartner (2,3) mit den Ultraschallsignalen (UI;UW) beaufschlagt wird.

7. Verfahren nach einen der vorangehneden Ansprüche, bei welchem die Lauffläche (31) mit Ultraschallimpulsen (UI) beaufschlagt wird.

8. Verfahren nach einem der Ansprüche 1-6, bei welchem die Lauffläche mit einer kontinuierlichen Ultraschallwelle (UW) beaufschlagt wird.

9. Anordnung zur Beurteilung des Reibverhaltens zwischen zwei Gegenlaufpartnern (2,3), von denen jeder eine Lauffläche (21,31) aufweist, wobei sich die eine Lauffläche (31) im Betriebszustand entlang der anderen Lauffläche (21) bewegt, welche Anordnung einen Ultraschallwandler (4) und eine Auswerteeinheit (6) umfasst, wobei der Ultraschallwandler (4) eine der Laufflächen (31) mit Ultraschallsignalen (UI;UW) beaufschlagt, von der Lauffläche (31) reflektierte Ultraschallsignale als Echosignale (ES) empfängt und diese als Empfangssignale der Auswerteeinheit (6) zuführt, und wobei die Auswerteeinheit (6) Auswertemittel (61-65) umfasst, welche die Dopplerverschiebung der Empfangssignale ermittelt, und mittels der Dopplerverschiebung einen Kennwert zur Beurteilung des Reibverhaltens zwischen den Gegenlaufpartnern (2,3) bestimmt.

10. Verwendung eines Verfahrens gemäss einem der Ansprüche 1-8 oder einer Anordnung gemäss Anspruch 9 zur Beurteilung des Reibverhaltens zwischen einem Kolbenring und seinem Gegenlaufpartner in einer Brennkraftmaschine, insbesondere in einem Grossdieselmotor.

## Claims

1. Method for assessing the frictional behaviour between two relatively moving partners (2, 3), each of which has a contact surface (21, 31), with the one contact surface (31) moving along the other contact surface (21) in the operating state, comprising the following steps:
a) one of the contact surfaces (31) is acted on by ultrasonic signals (UI; UW),
b) ultrasonic signals which are reflected by the contact surface (31) are received as echo signals (ES),
c) the echo signals (ES) are supplied to an evaluation unit (6) as received signals,
d) the Doppler shift of the received signals is determined by means of the evaluation unit (6), and
e) the friction between the relatively moving partners (2, 3) is assessed by means of the Doppler shift.

2. Method in accordance with claim 1, in which the received signals are mixed for demodulation with a reference signal (RS) which has the same frequency as the ultrasonic signals (UI; UW) with which the contact surface (31) is acted on.

3. Method in accordance with any one of the preceding claims, in which a frequency spectrum for the Doppler shift relative to the frequency of the ultrasonic signals (UI; UW) is determined by means of the evaluation unit (6).

4. Method in accordance with any one of the preceding claims, in which only those frequencies in the frequency spectrum are taken into account for assessing the frictional behaviour which are greater than a predetermined threshold value.

5. Method in accordance with any one of the preceding claims, in which a characteristic value (K) for assessing the friction is determined which is representative for the signal power of the received signals in a predetenninable frequency range (FB).

6. Method in accordance with any one of the preceding claims, in which the contact surface (31) is acted on by the ultrasonic signals (UI; UW) substantially perpendicularly to the direction of the relative movement (A) of the two relatively moving partners (2, 3).

7. Method in accordance with any one of the preceding claims, in which the contact surface (31) is acted on by ultrasonic pulses (UI).

8. Method in accordance with any one of the claims 1 - 6, in which the contact surface is acted on by a continuous ultrasonic wave (UW).

9. Arrangement for assessing the frictional behaviour between two relatively moving partners (2, 3), each of which has a contact surface (21, 31), with the one contact surface (31) moving along the other contact surface (21) in the operating state, said arrangement comprising an ultrasonic converter (4) and an evaluation unit (6), in which the ultrasonic converter (4) directs ultrasonic signals (UI; UW) onto one of the contact surfaces (31), in which ultrasonic signals which are reflected by the contact surface (31) are received as echo signals (ES), and the latter are supplied to an evaluation unit (6) as received signals, and in which the evaluation unit (6) comprises evaluation means (61 - 65) which determines the Doppler shift of the received signals and determines by means of the Doppler shift a characteristic value for the assessment of the friction between the relatively moving partners (2, 3).

10. Use of a method in accordance with any one of the claims 1 - 8 or of an arrangement in accordance with claim 9 for assessing the friction between a piston ring and its relatively moving partner in an internal combustion engine, in particular in a large diesel engine.

## Revendications

1. Procédé pour apprécier la tenue au frottement entre deux partenaires de roulements opposés (2, 3) dont chacun présente une surface de roulement (21, 31), où une surface de roulement (31), à l'état de fonctionnement, se déplace le long de l'autre surface de roulement (21), avec les étapes suivantes :
a) une des surfaces de roulement (31) est sollicitée par des signaux ultra-sonores (UI ; UW),
b) des signaux ultra-sonores réfléchis par la surface de roulement (31) sont reçus comme signaux d'écho (ES),
c) les signaux d'écho (ES) sont transmis comme signaux de réception à une unité d'évaluation (6),
d) au moyen de l'unité d'évaluation (6), le déplacement Doppler des signaux de réception est déterminé et
e) au moyen du déplacement Doppler, le frottement entre les partenaires de roulements opposés (2, 3) est apprécié.

2. Procédé selon la revendication 1, où les signaux de réception, pour la démodulation, sont mélangés avec un signal de référence (RS) qui a la même fréquence que les signaux ultra-sonores (UI ; UW) par lesquels la surface de roulement (31) est sollicitée.

3. Procédé selon l'une des revendications précédentes, dans lequel on détermine au moyen de l'unité d'évaluation (6) un spectre de fréquences pour le déplacement Doppler relativement à la fréquence des signaux ultra-sonores (UI ; UW).

4. Procédé selon l'une des revendications précédentes, dans lequel, pour apprécier la tenue au frottement, on prend en considération du spectre de fréquences seulement les fréquences qui sont plus grandes qu'une valeur limite prédéterminée.

5. Procédé selon l'une des revendications précédentes, dans lequel est déterminée une grandeur caractéristique (K) pour apprécier la tenue au frottement qui est représentative de la puissance des signaux de réception dans une plage de fréquence (FB) pouvant être prédéfinie.

6. Procédé selon l'une des revendications précédentes, où la surface de roulement (31) est chargée sensiblement perpendiculairement à la direction du mouvement relatif (A) des deux partenaires de roulements opposés (2, 3) en signaux ultra-sonores (UI ; UW).

7. Procédé selon l'une des revendications précédentes, où la surface de roulement (31) est chargée en impulsions ultra-sonores (UI).

8. Procédé selon l'une des revendications 1 à 6, où la surface de roulement est chargée avec une onde ultra-sonore continue (UW).

9. Agencement pour apprécier la tenue au frottement entre deux partenaires de roulements opposés (2, 3) dont chacun présente une surface de roulement (21, 31), où une surface de roulement (31) à l'état de fonctionnement, se déplace le long de l'autre surface de roulement (21), cet agencement comprenant un transducteur d'ultrasons (4) et une unité d'évaluation (6), où le transducteur d'ultrasons (4) charge l'une des surfaces de roulement (31) en signaux ultra-sonores (UI ; UN), reçoit des signaux ultra-sonores réfléchis par la surface de roulement (31) comme signaux d'échos (ES) et transmet ceux-ci comme signaux de réception à l'unité d'évaluation (6), et où l'unité d'évaluation (6) comprend des moyens d'évaluation (61-65) qui détermine le déplacement Doppler des signaux de réception et qui définit au moyen du déplacement Doppler une valeur caractéristique pour apprécier la tenue au frottement entre les partenaires de roulements opposés (2, 3).

10. Utilisation d'un procédé selon l'une des revendications 1 à 8 ou d'un agencement selon la revendication 9 pour apprécier la tenue au frottement entre un segment de piston et son partenaire de roulement opposé dans une machine à combustion interne, notamment un grand moteur diesel.
